# EUROPEAN PATENT SPECIFICATION

(11) **EP 2 074 289 B1**
(45) Date of publication and mention of the grant of the patent: **16.05.2018**
(21) Application number: 07823163.6
(22) Date of filing: 28.09.2007
(51) Int. Cl.: F01K 17/04, F01D 15/10, H02K 9/00, H02K 7/18

(54) **STEAM POWER PLANT**
DAMPFKRAFTWERK
CENTRALE THERMIQUE À VAPEUR

(30) Priority: 18.10.2006 FI 20065666
(43) Date of publication of application: 01.07.2009
(73) Proprietor: Rauman Konepaja Oy, 26100 Rauma (FI)
(72) Inventor: LARJOLA, Jaakko, 52700 Mäntyharju (FI); KOSKELAINEN, Lasse, 53920 Lappeenranta (FI); PYRHÖNEN, Juha, 53850 Lappeenranta (FI); TUUTTI, Veikko, 53900 Lappeenranta (FI)
(74) Representative: Papula Oy
(86) International application number: PCT/FI2007/050526
(87) International publication number: WO 2008/046957

(56) References cited:
- DE-A1- 10 012 927
- JP-A- 2004 353 571
- US-A- 2 511 854
- US-A1- 2004 093 869
- US-A1- 2006 222 523

## Description

The invention relates to a steam power plant.

This specification presents a water-steam power plant which is suitable for generating electric energy also in quite a small-scale e.g. of biomass. To achieve this object, the structure and operation of the turbogenerator of the water-steam power plant have been modified from a conventional steam power plant, as will be described in more detail in the following.

In order to obtain good efficiency of the plant despite low (e.g. 1000 kW) power, its steam turbine and the rotor of the electric generator related to it have to rotate quickly, e.g. more than 12000 rpm. In the plant according to the invention, the generator and the feed pump are directly connected to this turbine, and the generator is electrically connected to the network by a two-way frequency converter so that its rotation speed can vary according to each optimum rotation speed. Due to its flexible adjustment, the plant is able to operate in the power range of 40...100% with good efficiency.

The turbogenerator shaft is bearing-mounted by water bearings; thus, also the lubricant system is omitted from the plant, which along with cost savings also increases the plant's friendliness to the environment.

The fact that all the main parts of the turbogenerator, the turbine, the generator and the feed pump, are on the same shaft vertically, which is lubricated by water-lubricated bearings, and also the generator is made steam-resistant, enables making the turbogenerator hermetic i.e. totally tight outwards. The turbine body structure is supported on its shaft into a vertical pipe and set inside its end. The pipe therefore operates as a base, a support body and a counter part machined of its inner surface to the turbine body structure and further as a condensate removal pipe. Thus, it is easy to form connections in the pipe for a steam inlet and bled steam/condensate removers.

The hermetic turbogenerator is an enclosed unit so that, in practice, no steam leaks occur. Thus the plant, contrary to a normal steam power plant, does not require a feed water unit of water conveyed from the outside. Also the vacuum pump of the condenser is very small in comparison with a normal one; its purpose is only to eliminate a possible air leak occurring through flanged seals. Therefore are provided considerable improvement and cost saving compared with the conventional steam power plant structure, which traditional structure appears, inter alia, in *Tekniikan käsikirja* (Engineering Handbook).

A structure somewhat similar to the turbogenerator structure described in this invention has been suggested to be used in small-sized power plants based on the Rankine cycle of organic circulation medium (ORC) the operation of which is substantially different due to the properties of circulation medium differing greatly from steam. The prior art of the ORC technology in question appears e.g. in publications J. Larjola, *Energy converter,* Finnish patent No. 66234, 10 September 1984, and J.P. van Buijtenen, J. Larjola, T. Turunen-Saaresti, J. Honkatukia, H. Esa, J. Backman and A. Reunanen, "Design and validation of a new high expansion ratio radial turbine for ORC application", 5th European conference on Turbomachinery, Proceedings, pp. 1091-1104, Prague, March 17-22, 2003. The US patent application No. 2004/093869 A1 discloses a lead-in structure for coupling of a turbogenerator in a circulating process of a circulating medium. The Japanese patent application JP20044353571 discloses a power generating device and a power generating method capable of reducing the size and volume of an overall system by efficiently cooling the heating parts of a turbine generator. A compressor-evaporator system for liquefied gas is disclosed in the US patent application No. 2006/0222523 A1.

When operating with water steam, the turbine has to be made multi-stage and usually also fractional-supply because of the great change in specific enthalpy and small volume flow of water steam compared with organic steam. However, a particular challenge is the generator, because water steam is not a sealing in the way organic steam is.

Due to the hermetic structure of the turbogenerator, hot water steam passes through the electric machine in the air gap and operates as the refrigerant of the electric machine. The water steam inside the electric machine sets strict requirements for the sealing of the stator winding.

For protecting the stator winding, there are two alternatives: either sealing materials or the manufacturing technique is chosen so that the winding endures water steam or the stator is totally confined from water steam.

When observing the latter way, the following can be done: the stator of the electric machine is protected e.g. by a sleeve manufactured of vinyl-ester-impregnated fibreglass material.

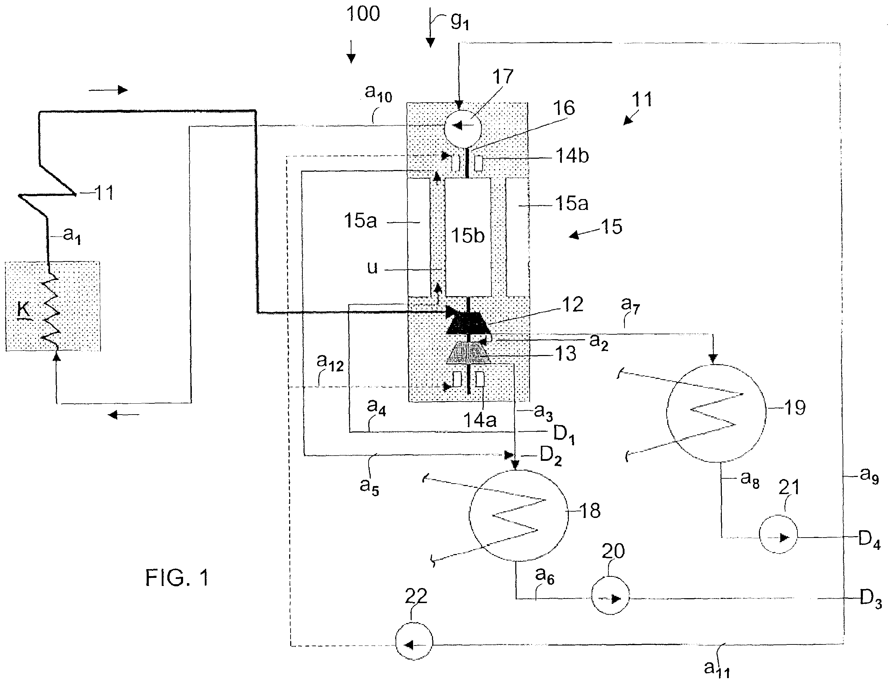

An advantageous implementation of the turbogenerator structure related to the invention is shown in Fig. 1. The figure shows an impulse-type turbine alternative and a generator alternative exposed to water steam, provided with wire windings.

In this example, the rotation speed of the rotor was chosen 14000 rpm and the entry state of live steam 60 bar and 470°C. The rotor is bearing-mounted with water-lubricated pivot segment bearings. The turbine is a fractional-supply axial-flow turbine. The generator is an asynchronous generator. The turbine has a bleeding to a higher-pressure condenser in which half of live steam flow is taken before the last stage.

A water-steam power plant according to the invention is characterised by what is presented in the patent claims.

The invention will now be described with reference to some advantageous embodiments of the invention shown in the accompanying figures, to which the invention is, however, by no means intended to be solely defined.
Fig. 1 is an illustration of the principle of a hermetic water-steam power plant according to the invention.
Fig. 2 shows a cross-sectional view of a turbine structure.
Fig. 3 shows a partial section view of a steam turbine section 12, 13.
Fig. 4 shows fitting a turbine body in a condensate pipe.

Fig. 1 shows an advantageous application of an electricity-producing small-sized power plant 100 according to the invention. The steam power plant 100 for producing electricity according to the invention comprises a boiler K in which fuel is brought and which fuel is burned in the boiler K and it heats water in a fitting a₁₀ inside the boiler K evaporating it, whereby the evaporated water is superheated in a superheater 11. The superheated steam is conveyed along a fitting a₁ to a two-stage steam turbine, whereby the steam turbine 12, 13 comprises a high-pressure turbine 12 and, after it, a low-pressure turbine 13 and, between them, a fitting/fittings or flow paths a₂, whereby the steam is first conveyed to the high-pressure turbine 12 and further from it to the low-pressure turbine 13. From the low-pressure turbine 13, there is a removal fitting a₃ further for steam having lower temperature, whereby from the fitting a₃ there is via a branch point D₁ a fitting a₄ to an electric generator 15. The electric generator 15 comprises a stator 15a and a central rotating rotor 15b on a shaft 16.

The temperature of steam coming into a space U between the stator 15a and the rotor 15b is lower than the temperature of live steam. Cooling steam for cooling the stator 15a and the rotor 15b is conveyed into the space U along the fitting a₄ and, from the interspace U in question, further along a removal fitting a₅ into a branch point D₂ and to join the fitting a₃. The fitting a₃ is further conveyed to a condenser 18 and from the condenser 18 there is a fitting a₆ further to a branch point D₃. A pre-feed pump 20 pumps the condensate along the fitting a₆ to the branch point D₃ from which it is conveyed along a fitting a₉ further to a main feed pump 17 on the shaft 16 which conveys water further to the fitting a₁₀ and further to the boiler K and further to the circulation. From the high-pressure turbine 12 of the two-stage steam turbine 12, 13, there is a fitting a₇ to a condenser 19 from which a fitting a₈ leads further to a branch point D₄ in the fitting a₉. The fitting a₈ comprises a pre-feed pump 21 for conveying water guided from the condenser 19 from the branch point D₄ to the fitting a₉. Water is further conveyed from the branch point D₃ via a fitting a₁₁ and by means of a pump 22 for the lubrication of an upper water-lubricated bearing 14b on the shaft 16 and along a fitting a₁₂ for the lubrication of a lower water-lubricated bearing 14a. The system is totally closed and hermetic. Thus, e.g. no steam leaks outwards nor air leaks inwards occur. The steam turbine/electric generator body structure 11 is located vertically of its shaft 16 and the rotating rotor 15b of the electric generator 15 and the high-pressure turbine 12 and the low-pressure turbine 13 of the steam turbine 12, 13 itself are located on the same shaft 16 rotating along it. Correspondingly, on the same shaft 16 is located the main feed pump 17 by means of which water conveyed from the condensers is further conveyed to the circulation to the fitting a₁₀ and the boiler K and further along the fitting a₁ to the superheater 11 and back to the steam turbine 12, 13.

According to the invention, the structure is therefore arranged supported by a condensate pipe 23 so that the metal condensate pipe 23 operates as the support body of the body structure 11 and the shell structure 24 of the turbogenerator 100 in which structure the steam turbine/electric generator/pump combination 12, 13, 15, 17 is set, whereby the condensate pipe 23 comprises a pipe joint 23a in which is joined a first steam feed of superheated steam coming from the boiler K.

According to the invention, water is further circulated after the steam turbine 12, 13 for the lubricant of the water-lubricated bearings 14a, 14b which bearings support the rotating shaft 16. By using the water-lubricated bearings 14a, 14b, the system is tight also outwards at the point of the bearings. In conventional bearing arrangements, there is an air connection outwards, whereby leaks into the system are probable. In the structure according to the invention, no air connection exists even through the bearings 14a, 14b.

In the small-sized power plant according to the invention, the steam power plant 100, the power is e.g. about 1000 kW when circulating lower-temperature steam conveyed from the low-pressure turbine 13 further for cooling medium for the electric generator 15, advantageously into the space U between the rotating rotor 15b and the stator 15a. Thus, it has been realised in the invention to use steam medium further as cooling medium for the stator/rotor combination of the electric generator located above the high-pressure steam turbine. Upmost in the structure is located the pump 17, which is the main feed pump and is rotated by the shaft 16 and by means of which water conveyed from the condensers 18, 19 is further pumped to the boiler K and further into the closed water and steam circulation system. According to the invention, the bearing 14b is located between the pump 17 and the rotor 15b and, correspondingly, the bearing 14a is located below the low-pressure turbine 13. The pump 17 is located above the bearing 14b and upmost in the structure. Axis X₁ has been drawn in Fig. 1 which is also a geometric rotation axis for the rotor 15b and the vertical axis of the structure. The direction of the gravitation field is designated with g₁ and an arrow. The direction of the gravitation field g₁ is the direction of the geometric rotation axis X₁ of the shaft 16.

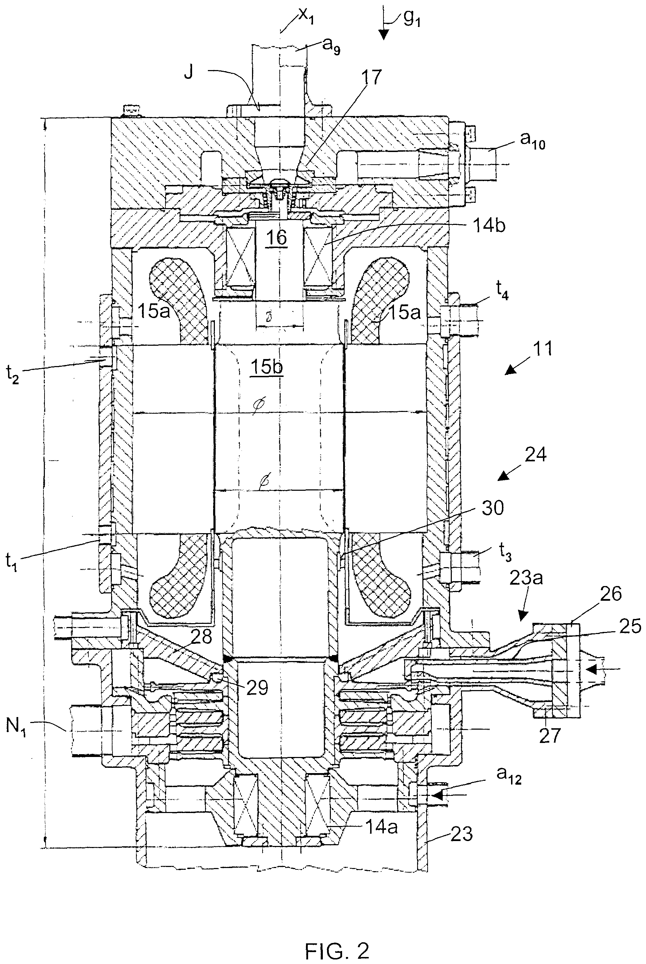

Fig. 2 shows a cross-sectional view of a hermetic steam turbine/electric generator apparatus. The apparatus consists of an upper shell 24 and the steam turbine 12, 13 inside it which is arranged on the shaft 16 to rotate along with it and on which shaft 16 is also arranged the rotor 15b of the electric generator 15. The stator 15a of the electric generator 15 surrounds the rotor 15b and is in a fixed position inside the shell 24. In the embodiment, the stator 15a comprises a winding and the rotor 15b is an iron core. Naturally, there can be different winding alternatives within the scope of the invention. The stator 15a and the rotor 15b are cooled by cooling steam. Some steam being in the process is conveyed for cooling steam for the electric generator 15. Cooling water is conveyed in the shell 24 via a connection t₁ and the cooling water is conveyed out of the shell 24 at another point in the shell via a connection t₂. Therefore, cooling water circulates in the shell 24 and cools the electric generator 15 and its windings. As shown in the figure, cooling steam is brought inside via a connection t₃ and the cooling steam is conveyed between U of the rotating rotor and the stator in the fixed position and further out via a removal connection t₄.

Furthermore, on the shaft 16 is located the steam turbine 12, 13 which is two-stage comprising the high-pressure steam turbine section 12 and the low-pressure steam turbine 13 below it. Live steam is conveyed via the connection 23a to the high-pressure steam turbine 12 the connection 23a consisting of a flange joined to the pipe 23 and a pipe joint i.e. a connection inside which a live steam feeding nozzle 25 is installed by means of a connection flange 26.

According to the invention, the body 11 rests supported by the pipe 23 below, inside of which the steam turbine 12, 13 and the shaft 16 and structures joined to it with its electric generator 15 are joined. Said pipe 23 operates as the support of the whole structure, especially for the turbine body, and the rotation and central axis X₁ of the whole structure is also the central axis of the pipe 23. In the enclosed Fig. 2, the direction of the gravitation field is designated with arrow g₁. The pipe 23 operates thus as a condensate removal pipe and water is further conveyed via the condenser 18 and the condensate pump 20 into the main feed pump 17 located in the upper part of the rotation shaft 16 via the inlet pipe a₉ and a connection pipe J centrally. Further by rotating the shaft 16, water is conveyed pumped by the pump 17 back via the fitting a₁₀ to the boiler K and further into the circulation to the fitting a₁. Bled-steam outlet connections of the steam turbine 13 are designated with N₁ and bled steam is conveyed out of the structure further to the high-pressure condenser 18. Feed water for the boiler K is conveyed from such a pump 17 which is rotated by the generator 15 via its shaft 16 and in which pump 17 the inlet is centrally via a pipe or a pipe connection in the direction of the rotation axis X₁ from the condensate line a₉.

The bled-steam outlet of the steam turbine is connected, as described above, to the cooling of the electric generator so that one of the outlets, advantageously the outlet a₃ of lower temperature in relation to live steam, in which the temperature of steam is e.g. 70°C. The temperature of the object to be cooled, i.e. the stator winding and the rotor, is naturally higher than this in order for heat exchange to occur. From the outlet a₃, steam has been conveyed to the cooling steam inlet t₃ of the shell 24, whereby the cooling steam is conveyed into the space U between the non-rotating stator 15a and the rotating central rotor 15b. Said steam circulation is maintained by a blower blade set 30 installed on the shaft 16 and rotated by it. In the arrangement, the windings of the generator 15 have to be well confined. In the arrangement according to the invention, the whole shell structure and the pipe connected to it and the steam/fluid circulations connected to the arrangement are closed outwards. The system is therefore hermetic i.e. e.g. no air leaks occur outwards from the system / inwards into the system.

In the system according to the invention, the shaft 16 is bearing-mounted by the water-lubricated bearings 14a and 14b in which water is conveyed from the condensate side of the system. The structures of the bearings are hermetic i.e. no leaks occur through them outwards from the system / inwards into the system.

The system is also easy to build, because live steam on the high-pressure side 12 of the steam turbine is conveyed via a flange connection, whereby the steam nozzle 25 comprising the flange 26 is connected to the pipe 23 in a flange 27 connected to its pipe joint 23a. Thus, the arrangement is easily assembled and then advantageous of its construction and the seal surfaces of the flange connection 27/26 are in considerably lower temperature than live steam by which arrangement a flange leak is prevented. The whole live steam line can now be made as a welded structure. The live steam temperature is in this case 470°C, it is after the first stator nozzles only about 300°C. With the arrangement described in the invention, the joint flange of the live steam pipe is now exposed only by this steam of 300°C for which hermetic flanged seals are available, and also thermal motion is kept small. Furthermore, by the described installation arrangement, the whole pipe conveying hot steam of 470°C can be done as a uniform welded structure. Correspondingly, it has been easy to arrange the bled steam outlet connections N₁ as pipe joints in the pipe 23, supported by which the weight of the body 11 with its shell 24 rests.

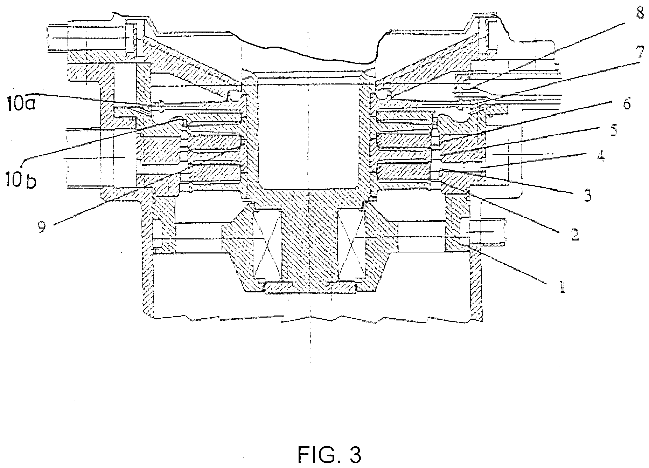

Fig. 3 shows the main parts of the turbine according to a construction alternative. Legends of the figure: 1 O-ring seal (several), 2 fourth-stage stator blades (reaction stage), 3 fourth-stage stator blades, 4 bled-steam passages, 5 third-stage rotor blades, 6 third-stage stator blades, 7 pressure-balancing bores, 8 first fractional-supply stage stator nozzles (fixed part of steam nozzle 25), 9 labyrinth seal (several), 10a first-stage rotor blades, 10b second stage (impulse stage). The turbine parts are mainly rotationally symmetrical.

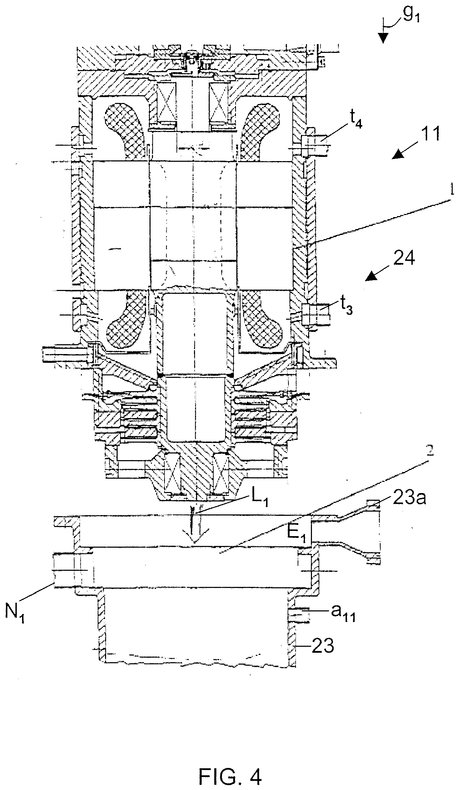

Fig. 4 illustratively shows the assembly stage of the apparatus in which the shell 24 of the apparatus body 11, with the shaft 16, the electric generator 15, the steam turbine 12, 13 connected to it, is set as shown by arrow L₁ inside the pipe 23 operating as the base. The pipe 23 therefore operates as a supporting structure for the body 11 and as a control part for steam and as a removing structure of steam going to the condenser. The inner surfaces of the pipe 23 are machined for forming abutment surfaces for the steam turbine 12, 13 and the steam-condensate passages.

According to the invention, incoming superheated live steam is confined from the other structures by means of an interflange 28. The structure also comprises a so-called piston part 29 i.e. a compensating piston in which steam pressure is conveyed which lightens the structure and thus decreases bearing forces.

The first stage of the steam turbine 12 is advantageously a fractional-supply impulse turbine. The first stage can also be a fractional-supply Curtis wheel.

Therefore, there is the flanging 28 between the electric generator 15 and the steam turbine 12, 13 by means of which the electric generator 15 is kept confined from an entry space E₁ of hot live steam and, in the structure, the electric generator 15 is located above the steam turbine 12, 13 and the pump 17 above the electric generator 15, and the direction of the shaft 16 is the direction of the gravitation field g₁, and the rotation speed of the rotor 15b of the electric generator 15 of the steam turbine is at least 10000 rpm and the produced electric power in the small-sized power plant about 1000 kW. The live steam is brought e.g. in 60 bar and the temperature of 470°C.

The Curtis wheel means an arrangement in which steam in the first stator nozzle is given extremely high speed, whereby correspondingly the steam pressure decreases strongly and its specific volume increases considerably. This stator nozzle is followed by two impulse-type rotor blade sets between which there is a stator blade set. In these, the pressure does not decrease much, because of which the Curtis wheel can be used as fractional-supply and its specific enthalpy decrease is great. Due to the great specific enthalpy decrease, the diameter of the Curtis wheel becomes comparatively small, which is an advantage.

As described above, there are two alternatives in implementing the generator in this hermetic water steam process: either sealing materials or the manufacturing technique is chosen so that the winding endures water steam or the stator is totally confined from the water steam. The arrangement of Figs. 1 and 2 observes the first alternative, i.e. the stator windings are directly exposed to water steam.

One has tried to make the assembly and installation of the turbine in the structure according to the invention as easy as possible with a carefully designed structure in which particular attention has been given to hermetic sealing: the number of flanges has been minimised and the live steam is brought to the steam turbine inside cooler steam. Thus, the flanged seals are made hermetic: if the flange were directly exposed to hot, in practice e.g. 470°C live steam, it would easily start leaking as a result of thermal motion. The rotation speed of the rotor 15b of the electric generator 15 is advantageously more than 10000 rpm, advantageously more than 12000 rpm.

The turbine takes form when the turbogenerator itself is lowered in a pipe connected to condensers. The pipe 23 in question includes a set of machined seal surfaces which enable, inter alia, the feed of bearing water and the removal of two steams of different pressure in the condensers.

A housing including first stator nozzles (supply level e.g. 0.2) is directly welded in a live steam pipe which is surrounded by after the first stage much cooler steam. Therefore, exposing the flange connection 26 to hot live steam is prevented and the whole live steam line is of a welded structure.

At the end 26 of the live steam pipe a₁, there are readily first stator nozzles 8. The structure of the water-lubricated bearings 14a, 14b of the turbogenerator can be e.g. pivot segment bearings. After having lubricated the bearings, water flows along the passages and the pipe 23 of the turbogenerator back to the condenser.

In the radial direction, the turbogenerator shaft is bearing-mounted with two radial bearings. In this example construction, the turbogenerator shaft is in the vertical position and, in connection with the bearing, there is also a two-way axial bearing. The weight of the turbogenerator rotor has been compensated with different labyrinth seals and with piston force created from the feed pressure of lubricating water.

When the turbine rotates, axial pressure force is created from the pressures affecting its blade sets which force can be partially compensated by conveying the condenser pressure into a special compensation piston. This compensation is obtained accurate and thus the axial bearings small, if the pressure of steam conveyed to the compensation piston is adjusted by a measurement signal obtained from the axial bearing, proportional to the force applied to it.

The main feed pump 17 of the steam plant according to the invention is on the same shaft 16 as the turbine and the generator. Due to high rotation speed, it can be implemented one-stage and still small-sized. For obtaining good efficiency, it is advantageous to implement the pump as one of partial emission type, the so-called Barske pump. Such a pump is also insensitive to cavitation so it only requires quite low pre-feed pressure. The pre-feed pressure is developed by a hermetic pump e.g. provided with a magnetic clutch which pressure can also be used for feeding above-mentioned water-lubricated bearings.

## Claims

1. An electricity-producing steam power plant (100), which steam power plant (100) is an outwards closed hermetic structure which is supported by a pipe (23) and comprises inside a shell (24) of an electric generator (15) a stator (15a) of the electric generator and a rotating rotor (15b) on a shaft (16) and in which structure there is a rotating steam turbine (12, 13) on the same shaft (16), and steam superheated in the steam power plant (100) is conveyed to the steam turbine (12, 13), some steam being in the process is conveyed for cooling steam for the electric generator (15), **characterised in that** conveyed cooling steam is flown into a space (U) between the stator (15a) and the rotating rotor (15b) and back to the circulation, that the pipe (23) comprises a connection (23a) in which a fitting (a₁) is connected and via which connection is conveyed a steam nozzle pipe (25) into connection with a high-pressure steam turbine (12) into a space (E₁), and that the pipe (23) comprises an outlet connection (N₁, N₂...), and that there is a cooling-zone fitting (a₁₁, a₁₂) for conveying cooling water for water-lubricated bearings (14a, 14b) which bearings support the rotating shaft (16), that the pipe (23) operates as the condensate removal pipe, whereby there is a fitting (a₃) which connects to a condenser (18), from which condenser (18) there is a fitting (a₆) for conveying water to a fitting (a₉) and further to the pump (17) centrally located on the shaft (16) which further pumps the water back to the boiler (K) and further to the circulation in the fitting (a₁).

2. An electricity-producing steam power plant (100) according to claim 1, **characterised in that** the apparatus comprises blower blades (30) rotated by the shaft (16) for providing cooling steam flow in the air gap (U) between the stator (15 a) and the rotor (15b).

3. An electricity-producing steam power plant (100) according to claim 1 or 2, **characterised in that** the shaft (16) is vertical in the direction of the gravitation field (g₁) and that the steam power plant (100) comprises a fitting (a₁) for circulating water of a boiler (K) which fitting leads to a superheater (11) and further from the superheater (11) to the steam turbine (12, 13) to its higher-pressure steam turbine section (12) and from there to a lower-pressure steam turbine section (13), and that the shell (24) inside which the steam turbines (12, 13) and the electric generator (15) and the pump (17) are set at the end of the pipe (23) supporting the structure and inside the pipe, whereby the pipe (23) operates as a component supporting the structure and also as a condensate removal pipe, and the temperature of the cooling steam for the electric generator (15) is advantageously lower than the inlet steam for the steam turbine (12, 13).

4. An electricity-producing steam power plant (100) according to any one of preceding claims, **characterised in that** the steam is conveyed in a piston part (29) connected to the shaft (16), whereby by means of steam pressure the weight of the rotating structures on the shaft (16) are lightened.

5. An electricity-producing steam power plant (100) according to any one of preceding claims, **characterised in that** between the electric generator (15) and the steam turbine (12, 13) there is a flanging (28) by means of which the electric generator (15) is kept confined from the entry space (E₁) of hot live steam, and that in the structure the electric generator (15) is located above the steam turbine (12, 13) and the pump (17) above the electric generator (15), and that the direction of the shaft (16) is the direction of the gravitation field (g₁) and that the rotation speed of the rotor (15b) of the electric generator (15) of the steam turbine is at least 10000 rpm.

6. An electricity-producing steam power plant (100) according to any one of preceding claims, **characterised in that** the steam nozzle pipe (25) is surrounded by cooler steam and seal surfaces of a flange joint (26/27) are in a considerably lower temperature than the brought live steam, by means of which arrangement the leaking of steam outside through the flange is prevented.

7. An electricity-producing steam power plant (100) according to any one of preceding claims, **characterised in that** the turbogenerator comprises a compensation piston (29) by which it is possible to compensate the axial force created by pressures affecting a blade set by conveying there suitably pressurised steam so that compensation is obtained accurate by adjusting the pressure of the steam conveying to the compensation piston space by a measurement signal from the axial bearing, proportional to the force applied to it.

8. An electricity-producing steam power plant (100) according to any one of preceding claims, **characterised in that** the winding of the stator (15a) of the electric generator (15) is made steam-resistant or is totally confined from water steam.

9. An electricity producing steam power plant according to claim 1, **characterised in that** the stator (15a) is in a fixed position and comprises a winding and that the rotating rotor (15b) is an iron core.

## Patentansprüche

1. Elektrizitätserzeugendes Dampfkraftwerk (100), wobei das Dampfkraftwerk (100) eine nach außen hin geschlossene hermetische Struktur ist, die von einem Rohr (23) unterstützt wird und innerhalb einer Ummantelung (24) eines elektrischen Generators (15) einen Stator (15a) des elektrischen Generators und einen rotierenden Rotor (15b) auf einer Welle (16) umfasst, und wobei in dieser Struktur eine rotierende Dampfturbine (12, 13) auf der gleichen Welle (16) angeordnet ist, und Dampf, der im Dampfkraftwerk (100) überhitzt wird, zur Dampfturbine (12, 13) gefördert wird, wobei ein Teil des im Prozess befindlichen Dampfes zum Kühlen des Dampfes für den elektrischen Generator (15) gefördert wird, **dadurch gekennzeichnet, dass** geförderter Kühldampf in einen Raum (U) zwischen dem Stator (15a) und dem rotierenden Rotor (15b) und zurück in den Kreislauf geströmt wird, dass das Rohr (23) eine Verbindung (23a) aufweist, in der eine Armatur (a₁) eingebunden ist, wobei über diese Verbindung ein Dampfdüsenrohr (25) in Verbindung mit einer Hochdruck-Dampfturbine (12) in einen Raum (E₁) gefördert wird, und dass das Rohr (23) eine Auslass-Verbindung (N₁, N₂, ...) umfasst, und dass es eine Kühlzonenarmatur (a₁₁, a₁₂) zum Fördern von Kühlwasser für wassergeschmierte Lager (14a, 14b) gibt, welche die rotierende Welle (16) tragen, dass das Rohr (23) als die Kondensatabfuhrleitung arbeitet, wobei es eine Armatur (a₃) gibt, die mit einem Verflüssiger (18) verbunden ist, von welchem Verflüssiger (18) eine Armatur (a₆) zur Förderung von Wasser zu einer Armatur (a₉) und weiter zu der zentral auf der Welle (16) angeordneten Pumpe (17) vorhanden ist, die das Wasser weiter zurück zum Erhitzer (K) und weiter zum Kreislauf in der Armatur (a₁) pumpt.

2. Elektrizitätserzeugendes Dampfkraftwerk (100) nach Anspruch 1, **dadurch gekennzeichnet, dass** die Vorrichtung Gebläseflügel (30) aufweist, die von der Welle (16) gedreht werden, um einen Kühldampfstrom im Luftspalt (U) zwischen dem Stator (15a) und dem Rotor (15b) bereitzustellen.

3. Elektrizitätserzeugendes Dampfkraftwerk (100) nach Anspruch 1 oder 2, **dadurch gekennzeichnet, dass** die Welle (16) senkrecht in der Richtung des Gravitationsfeldes (g₁) steht und dass das Dampfkraftwerk (100) eine Armatur (a₁) zum Umwälzen von Wasser eines Erhitzers (K) aufweist, die zu einem Überhitzer (11) und weiter vom Überhitzer (11) zur Dampfturbine (12, 13) zu ihrem Turbinenbereich (12) mit höherem Dampfdruck führt, und von dort zu einem Turbinenbereich mit niedrigerem Dampfdruck, und dass die Ummantelung (24), innerhalb der die Dampfturbinen (12, 13) und der elektrische Generator (15) und die Pumpe (17) angeordnet sind, an das Ende des Rohrs (23) eingesetzt wird, wodurch das Rohr (23) als eine die Struktur unterstützende Komponente und außerdem als eine Kondensatabfuhrleitung arbeitet, wobei die Temperatur des Kühldampfes für den elektrischen Generator (15) vorteilhafterweise geringer als die des Einlassdampfes für die Dampfturbine (12, 13) ist.

4. Elektrizitätserzeugendes Dampfkraftwerk (100) nach einem der vorangehenden Ansprüche, **dadurch gekennzeichnet, dass** der Dampf in einem mit der Welle (16) verbundenen Kolbenteil (29) gefördert wird, wodurch mittels Dampfdruck das Gewicht der rotierenden Strukturen auf der Welle (16) entlastet wird.

5. Elektrizitätserzeugendes Dampfkraftwerk (100) nach einem der vorangehenden Ansprüche, **dadurch gekennzeichnet, dass** zwischen dem elektrischen Generator (15) und der Dampfturbine (12, 13) ein Flansch (28) vorhanden ist, durch den der elektrische Generator (15) vom Eintrittsraum (E1) des heißen Frischdampfes abgegrenzt gehalten wird, und dass in der Struktur der elektrische Generator (15) oberhalb der Dampfturbine (12, 13) und die Pumpe (17) oberhalb des elektrischen Generators (15) angeordnet sind, und dass die Richtung der Welle (16) die Richtung des Gravitationsfeldes (g₁) ist, und dass die Rotationsgeschwindigkeit des Rotors (15b) des elektrischen Generators (15) der Dampfturbine wenigstens 10.000 Umdrehungen pro Minute beträgt.

6. Elektrizitätserzeugendes Dampfkraftwerk (100) nach einem der vorangehenden Ansprüche, **dadurch gekennzeichnet, dass** das Dampfdüsenrohr (25) von kühleren Dampf umgeben ist, wobei Dichtflächen einer Flanschverbindung (26/27) auf einer wesentlich niedrigeren Temperatur als der eingebrachte Frischdampf liegen, durch welche Anordnung das Austreten von Dampf nach außen durch den Flansch verhindert wird.

7. Elektrizitätserzeugendes Dampfkraftwerk (100) nach einem der vorangehenden Ansprüche, **dadurch gekennzeichnet, dass** der Turbogenerator einen Kompensationskolben (29) aufweist, mit dem es möglich ist, die Axialkraft zu kompensieren, die durch Drücke erzeugt wird, die auf einen Schaufelsatz wirken, die durch das Fördern von in geeigneter Weise unter Druck stehendem Dampf erzeugt wird, so dass eine genaue Kompensation erreicht wird, indem der Druck des Dampfes, der zum Kompensationskolbenraum transportiert wird, durch ein Mess-Signal von dem Axiallager eingestellt wird, das proportional zu der darauf ausgeübten Kraft ist.

8. Elektrizitätserzeugendes Dampfkraftwerk (100) nach einem der vorangehenden Ansprüche, **dadurch gekennzeichnet, dass** die Wicklung des Stators (15a) des elektrischen Generators (15) dampfbeständig ausgeführt oder vollständig von Wasserdampf abgegrenzt ist.

9. Elektrizitätserzeugendes Dampfkraftwerk nach Anspruch 1, **dadurch gekennzeichnet, dass** sich der Stator (15a) in einer festen Position befindet und eine Wicklung aufweist, und dass der rotierende Rotor (15b) ein Eisenkern ist.

## Revendications

1. Centrale électrique à vapeur produisant de l'électricité (100), laquelle centrale électrique à vapeur (100) est une structure hermétique fermée vers l'extérieur qui est supportée par une conduite (23) et comprend à l'intérieur une enveloppe (24) d'un générateur électrique (15), un stator (15a) du générateur électrique et un rotor tournant (15b) sur un arbre (16) et structure dans laquelle il y a une turbine à vapeur rotative (12, 13) sur le même arbre (16), et de la vapeur surchauffée dans la centrale électrique à vapeur (100) est convoyée jusqu'à la turbine à vapeur (12, 13), une partie de la vapeur étant dans le processus est convoyée pour refroidir la vapeur pour le générateur électrique (15), **caractérisée en ce que** la vapeur de refroidissement convoyée est écoulée dans un espace (U) entre le stator (15a) et le rotor tournant (15b) et remise en circulation, que la conduite (23) comprend une connexion (23a) dans laquelle un raccord (a₁) est connecté et connexion par laquelle est convoyée une conduite de buse de vapeur (25) dans une connexion avec une turbine à vapeur à haute pression (12) dans un espace (E₁), et que la conduite (23) comprend une connexion de sortie (N₁, N₂, ...), et qu'il y a un raccord de zone de refroidissement (a₁₁, a₁₂) pour convoyer de l'eau de refroidissement pour des paliers lubrifiés à l'eau (14a, 14b), lesquels paliers supportent l'arbre tournant (16), que la conduite (23) fonctionne comme la conduite de retrait de condensat, ce par quoi il y a un raccord (a₃) qui est relié à un condenseur (18), condenseur (18) à partir duquel il y a un raccord (a₆) pour convoyer de l'eau jusqu'un raccord (a₉) et également jusqu'à la pompe (17) positionnée centralement sur l'arbre (16), laquelle repompe en outre l'eau jusqu'à la chaudière (K) et en outre jusqu'à la circulation dans le raccord (a₁).

2. Centrale électrique à vapeur produisant de l'électricité (100) selon la revendication 1, **caractérisée en ce que** l'appareil comprend des pales de soufflante (30) mises en rotation par l'arbre (16) pour fournir un écoulement de vapeur de refroidissement dans l'espace d'air (U) entre le stator (15a) et le rotor (15b).

3. Centrale électrique à vapeur produisant de l'électricité (100) selon la revendication 1 ou 2, **caractérisée en ce que** l'arbre (16) est vertical dans la direction du champ de gravitation (g₁) et que la centrale électrique à vapeur (100) comprend un raccord (a₁) pour faire circuler l'eau d'une chaudière (K), lequel raccord conduit à un surchauffeur (11) et en outre du surchauffeur (11) jusqu'à la turbine à vapeur (12, 13) jusqu'à son tronçon de turbine à vapeur à pression supérieure (12) et à partir de là jusqu'à un tronçon de turbine à vapeur à pression inférieure (13), et que l'enveloppe (24) à l'intérieur de laquelle les turbines à vapeur (12, 13) et le générateur électrique (15) et la pompe (17) sont placés à l'extrémité de la conduite (23) supportant la structure et à l'intérieur de la conduite, ce par quoi la conduite (23) fonctionne comme un composant supportant la structure et également comme une conduite de retrait de condensat, et la température de la vapeur de refroidissement pour le générateur électrique (15) est avantageusement inférieure à la vapeur d'entrée pour la turbine à vapeur (12, 13).

4. Centrale électrique à vapeur produisant de l'électricité (100) selon l'une quelconque des revendications précédentes, **caractérisée en ce que** la vapeur est convoyée dans une partie de piston (29) reliée à l'arbre (16), ce par quoi au moyen d'une pression de vapeur, les poids des structures tournantes sur l'arbre (16) sont allégés.

5. Centrale électrique à vapeur produisant de l'électricité (100) selon l'une quelconque des revendications précédentes, **caractérisée en ce qu'**entre le générateur électrique (15) et la turbine à vapeur (12, 13), il y a un bridage (28) au moyen duquel le générateur électrique (15) est maintenu confiné par rapport à l'espace d'entrée (E₁) de vapeur vive chaude, et que dans la structure, le générateur électrique (15) est situé au-dessus de la turbine à vapeur (12, 13) et la pompe (17) au-dessus du générateur électrique (15), et que la direction de l'arbre (16) est la direction du champ de gravitation (g₁) et que la vitesse de rotation du rotor (15b) du générateur électrique (15) de la turbine à vapeur est au moins de 10 000 t/min.

6. Centrale électrique à vapeur produisant de l'électricité (100) selon l'une quelconque des revendications précédentes, **caractérisée en ce que** la conduite de buse de vapeur (25) est entouré de vapeur plus froide et des surfaces d'étanchéité d'un joint de bride (26/27) sont à une température nettement inférieure à la vapeur vive amenée, agencement au moyen duquel les fuites de vapeur vers l'extérieur à travers la bride sont empêchées.

7. Centrale électrique à vapeur produisant de l'électricité (100) selon l'une quelconque des revendications précédentes, **caractérisée en ce que** le turbogénérateur comprend un piston de compensation (29) par lequel il est possible de compenser la force axiale créée par des pressions affectant un ensemble de pales en y acheminant de la vapeur pressurisée de manière adaptée de sorte qu'une compensation est obtenue précise en réglant la pression de la vapeur convoyée jusqu'à l'espace de piston de compensation par un signal de mesure provenant du palier axial, proportionnelle à la force appliquée à celui-ci.

8. Centrale électrique à vapeur produisant de l'électricité (100) selon l'une quelconque des revendications précédentes, **caractérisée en ce que** l'enroulement du stator (15a) du générateur électrique (15) est fabriqué résistant à la vapeur ou est totalement confiné par rapport à la vapeur d'eau.

9. Centrale électrique à vapeur produisant de l'électricité selon la revendication 1, **caractérisée en ce que** le stator (15a) est dans une position fixe et comprend un enroulement et que le rotor tournant (15b) est un noyau de fer.
